# EUROPÄISCHE PATENTANMELDUNG

(11) **EP 4 818 082 A1**
(43) Veröffentlichungstag der Anmeldung: **07.10.2026**
(21) Anmeldenummer: 25168462.7
(22) Anmeldetag: 04.04.2025
(51) Int. Cl.: B65G 15/44

(54) **FÖRDERGURT MIT DURCH FALTUNG AUSGEBILDETEN MITNEHMERN**

(71) Anmelder: Noltewerk GmbH & Co. KG, 48268 Greven (DE)
(72) Erfinder: van Üüm, Christoph, Gescher (DE)
(74) Vertreter: Lenzing Gerber Stute

(57) **Zusammenfassung**

Die Erfindung betrifft einen endlosen Fördergurt (1) mit einer Vielzahl an Mitnehmern (4), wobei die Mitnehmer (4) jeweils durch eine Faltung des Fördergurtes (1) ausgebildet sind.

## Beschreibung

Die vorliegende Erfindung betrifft einen Fördergurt mit den Merkmalen des Oberbegriffs des Anspruchs 1, eine Verwendung des Fördergurtes, einen Förderer, sowie ein Verfahren zur Herstellung eines endlosen Fördergurtes.

Fördergurte mit Mitnehmern, die auf der Oberfläche angeordnet sind, sind aus der Praxis bekannt. Es gibt verschiedene Einsatzbereiche bei denen die Fördergurte eine hohe Querstabilität aufweisen müssen. In der Landwirtschaft z. B. werden solche querstabilen Fördergurte zum Fördern von Erntegut eingesetzt. Insbesondere können solche Fördergurte in Querfördervorrichtungen, beispielsweise in Bandschwadern oder Kartoffelroder eingesetzt werden. Bandschwader nehmen das Erntegut über eine Aufnahmevorrichtung, Pickup-Vorrichtung genannt, auf, welche mit Zinken oder Rechen versehen sind und zwischen Aufnahmeflächen in einer Ebene parallel zur Fahrrichtung laufen, und dabei das Erntegut vom Boden aufnehmen und dem Querförderbändern zuführen. Mittels der Querfördervorrichtung wird das Erntegut dann seitlich zur Fahrtrichtung gefördert und wieder auf den Boden als Schwad oder dergleichen abgelegt. Querfördervorrichtungen werden auch in Mähmaschinen mit einem Mähwerk zum Fördern des abgemähten Erntegutes eingesetzt, wie beispielsweise in Draper-Schneidwerken.

Auch in sogenannten Knickförderern, beispielsweise mit Z-Bauform, die ein Fördern mit größeren Steigungen ermöglichen, ist der Einsatz solcher querstabilen Fördergurte bekannt.

Ein weiterer Einsatzbereich für besonders querstabile Fördergurte sind Muldenbandstrahlanlagen, in denen mittels der Fördergurtes umgewälzte Werkstücke in einem Strahlverfahren zum Entzundern, Entrosten und Entgraten bearbeitet werden.

Bei den genannten Einsatzzwecken werden Fördergurte aus vernetztem Polymer, insbesondere Gummi mit einer Vielzahl an eingebetteten Gewebelagen eingesetzt. Es ist bekannt, die auf dem Fördergurt befestigten Mitnehmer aus einem elastischen Material zu fertigen. Die Mitnehmer müssen stabil genug sein, um dem zu transportierendem Gut standzuhalten und dürfen dabei das Umlaufen des Fördergurtes um die Rollen nicht behindern.

Es ist eine Aufgabe der Erfindung einen Fördergurt mit Mitnehmern anzugeben, der leicht und günstig herzustellen ist.

Diese Aufgabe wird gelöst von einem Fördergurt mit den Merkmalen des Anspruchs 1, von einer Verwendung des Fördergurtes, von einem Förderer mit den Merkmalen des Anspruchs 6, sowie von einem Verfahren zur Herstellung eines endlosen Fördergurtes mit den Merkmalen des Anspruchs 8.

Demnach ist ein endloser Fördergurt mit einer Vielzahl an Mitnehmern, wobei die Mitnehmer jeweils durch eine Faltung des Fördergurtes ausgebildet sind vorgesehen. Der doppellagige Bereich bildet somit eine Erhöhung aus, die beim Einsatz des Fördergurtes als Prallfläche (Mitnehmer) wirkt.

Das Verfahren ist besonders einfach und kostengünstig zu automatisieren. Zusätzliche Schritte zur Fertigung und Befestigung von Mitnehmern an der Tragseite eines Fördergurtes entfallen.

Vorzugsweise weist der Fördergurt wenigstens eine, bevorzugt eine einzige Gewebelage auf. Die wenigstens eine Gewebelage kann durch ein in Querrichtung ausgerichtetes Monofilament gebildet sein, wodurch der Fördergurt besonders querstabil ist. Der Fördergurt ist vorzugsweise aus vernetztem Polymer, insbesondere Gummi gebildet. Der Fördergurt kann auch aus Kunststoff, insbesondere Thermoplast, mit wenigstens einer (bevorzugt genau einer) Gewebeeinlage gebildet sein. Es ist aber auch denkbar, zwei oder drei Gewebelagen einzusetzen, wenn eine höhere Querstabilität benötigt wird. Sollte die Gewebelage durch ein Multifilament gebildet sein, sind bevorzugt mindestens zwei Gewebelagen, insbesondere genau zwei Gewebelagen vorhanden, um die benötigte Querstabilität zu erreichen.

Bevorzugt ist der gefaltete Fördergurt im doppellagigen Bereich zur Fixierung der Faltung vernäht. Es ist daber auch denkbar, Klemmvorrichtungen einzusetzen oder die Lagen miteinander zu verkleben oder zu verschrauben.

Der Fördergurt weist bevorzugt eine Breite von mindestens 500 mm auf. Vorzugsweise liegt die Breite in einem Bereich von 800 mm - 1500 mm, bevorzugt zwischen 800 mm - 1000 mm.

Die Höhe der Mitnehmer liegt vorzugsweise in einem Bereich zwischen 5 mm und 60 mm, insbesondere zwischen 10 mm und 40 mm. Vorzugsweise weisen alle Mitnehmer dieselbe Höhe auf.

Außerdem ist eine Verwendung eines endlosen Fördergurtes in einer Querfördervorrichtung eines Draper-Schneidwerkes, eines Bandschwaders oder eines Kartoffelroders vorgesehen. Bei diesem Einsatzzweck muss der Fördergurt besonders querstabil sein, was durch das Falten bewirkt wird.

Zudem ist ein Förderer mit einem zuvor beschriebenen endlosen Fördergurt vorgesehen, wobei bevorzugt die Mitnehmer im Wesentlichen quer zur Längsrichtung des endlosen Fördergurtes ausgebildet sind und in Längsrichtung des endlosen Fördergurtes gleichmäßig beabstandet sind, und wobei der endlose Fördergurt über Umlenkrollen umläuft und ein Abstand zwischen zwei aufeinanderfolgenden Mitnehmern kleiner ist als die Längserstreckung eines Abtragbereichs von Umlenkrollen oder bei tragseitiger Führung, beispielsweise in einem Knickförderer, ist der Abstand kleiner als der Abstand zwischen den tragseitig angeordneten Stollen, so dass sichergestellt ist, dass beim Fördern stets ein Mitnehmer im Bereich der Stollen liegt und dadurch der Fördergurt besonders formstabil ausgebildet ist.

Der Fördergurt ist dabei über die Mitnehmer hinweg von einem ersten Ende bis zu einem zweiten Ende durchgängig ausgebildet. Die beiden Enden werden zur Ausbildung eines Endlosfördergurtes miteinander verbunden, bevorzugt vernäht.

Außerdem ist ein Verfahren zur Herstellung eines endlosen Fördergurtes mit Mitnehmern aufweisend die folgenden Schritte vorgesehen:
a) Bereitstellen eines Fördergurtes,
b) Falten des Fördergurtes und Ausbilden eines doppellagigen Bereichs zur Ausbildung eines Mitnehmers,
c) Befestigen der beiden Lagen aneinander im doppellagigen Bereich zur Fixierung der Faltung.

Fördergurte mit Mitnehmern können so besonders einfach gefertigt werden.

Vorzugsweise werden die zuvor genannten Schritte an einem durchgängigen Fördergurt an einer Vielzahl an gleichmäßig zueinander beanstandeten Positionen wiederholt, um eine Vielzahl an Mitnehmer auszubilden.

Danach wird vorzugsweise der gefaltete Fördergurt abgelängt und die beiden Enden des Fördergurtes aneinander zur Ausbildung eines Endlosfördergurtes befestigt.

Vorzugsweise werden in Schritt c) die beiden Lagen des Fördergurtes im doppellagigen Bereich miteinander vernäht. Ein solcher Befestigungsprozess ist besonders einfach automatisierbar.

Es ist vorteilhaft, wenn das Vernähen in Querrichtung des Fördergurtes über die gesamte Breite des ausgebildeten Mitnehmers erfolgt.

Das Vernähen umfasst wenigstens eine Naht, die bevorzugt in unmittelbarer Nähe zur Tragfläche angeordnet ist. Dadurch kann die Faltung im Fuß des Mitnehmers fixiert werden.

Es ist besonders vorteilhaft, wenn eine zweite Naht beim Vernähen ausgebildet wird, die zu einer ersten Naht in der Höhe beabstandet ist. Dadurch kann verhindert werden, dass der Mitnehmer eine Schlaufe ausbildet.

Das Verfahren ist besonders vorteilhaft, wenn der Fördergurt aus vernetztem Polymer mit einer einzigen eingebetteten Gewebelage gebildet ist und die Quersteifigkeit durch die Mitnehmer erhöht wird. Das Grundmaterial kann somit besonders einfach und kostengünstig sein und die benötigte Quersteifigkeit wird durch die Faltungen erzielt. Es ist aber auch denkbar, zwei oder drei Gewebelagen einzusetzen, wenn eine höhere Querstabilität benötigt wird. Sollte die Gewebelage durch ein Multifilament gebildet sein, sind bevorzugt mindestens zwei Gewebelagen, insbesondere genau zwei Gewebelagen vorhanden, um die benötigte Querstabilität zu erreichen.

Eine bevorzugte Ausführungsformen der Erfindung wird nachfolgend anhand der Zeichnungen näher erläutert. Gleichartige oder gleichwirkende Bauteile werden in den Figuren mit denselben Bezugszeichen bezeichnet.

Es zeigen:
- Fig. 1:: eine Darstellung eines umlaufenden Endlosfördergurtes,
- Fig. 2:: eine schematische Darstellung eines Abschnitts eines Endlosfördergurtes mit Mitnehmern, sowie
- Fig. 3:: eine schematische Darstellung eines Verfahrens zur Ausbildung der Mitnehmer.

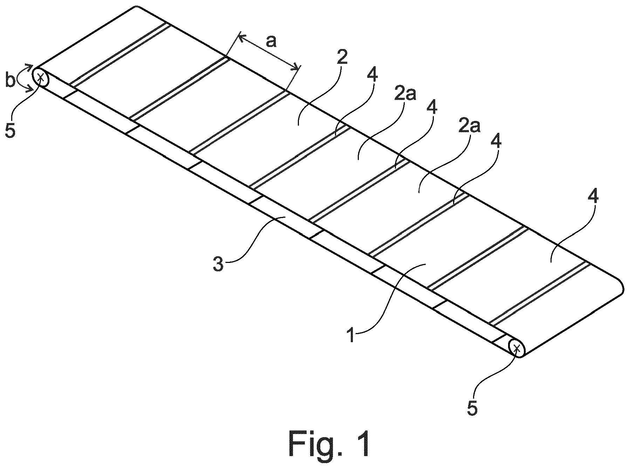

Figur 1 zeigt einen Fördergurt 1 mit einer Tragseite 2 und einer Laufseite 3. Die Laufseite 3 ist im Wesentlichen eben ausgebildet. Die Tragseite 2 bildet eine Tragfläche 2a für Transportgut, beispielsweise Erntegut aus, sowie Mitnehmer 4, die gegenüber der Tragfläche 2a erhaben sind und diese überragen. Die Mitnehmer 4 sind in der Figur 1 rein schematisch dargestellt. Sie erstrecken sich durchgängig über die gesamte Breite des endlosen Fördergurtes 1 und sind entlang der Laufrichtung des Fördergurtes 1 gleichmäßig beabstandet angeordnet. Die Mitnehmer 4 sind mit ihren Längsachsen quer zur Laufrichtung des Endlosfördergurtes 1 ausgerichtet. Der Endlosfördergurt 1 läuft auf Umlenkrollen 5 um. Der Abstand a zwischen den Mitnehmern 4 ist derart gewählt, dass eine Auflagefläche auf den Umlenkrollen bzw. der Abtragbereich b der Umlenkrollen größer ist als der Abstand a zwischen den Mitnehmern 4 (nicht dargestellt). Dadurch kann sichergestellt werden, dass immer mindestens zwei aufeinanderfolgende Mitnehmer 4 innerhalb des Abtragbereichs b liegen.

Das Endlosfördergurt 1 ist bevorzugt endlos geschlossen. Die Breite des Endlosfördergurtes 1 ist bevorzugt größer als 500 mm, insbesondere liegt sie zwischen 800 mm und 900 mm. Der Endlosfördergurt weist vorzugsweise eine Länge zwischen 10 m und 100 m auf, bevorzugt zwischen 10 m und 50 m.

Der Endlosfördergurt 1 kann ein Fördergurt aus vernetztem Polymer, insbesondere Gummi mit mindestens einer, bevorzugt genau einer eingebetteten Gewebelage sein. Vorzugsweise ist die Gewebelage aus einem Monofilament, das in Querrichtung ausgerichtet ist, gebildet. Der Endlosfördergurt bekommt dadurch eine besonders gute Quersteifigkeit, wodurch die Langlebigkeit erhöht wird, da der Endlosfördergurt in den Randbereichen die beim Anlauf auftretenden Kräfte gut aufnehmen kann und zudem bei Druck auf die Mitte durch Transportgut nicht ausbeult.

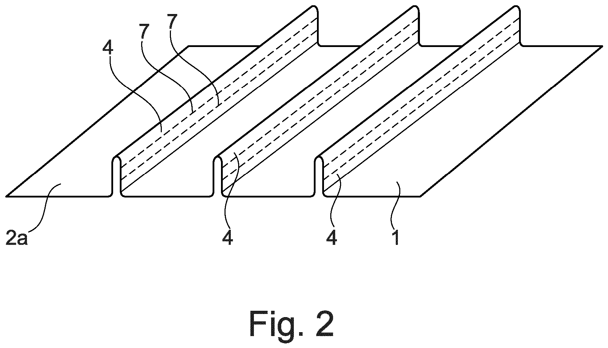

In der Figur 2 ist ein Abschnitt eines Endlosfördergurtes mit Mitnehmern 4 dargestellt. Die Mitnehmer 4 werden durch Falten des durchgängigen Fördergurtes und Ausbilden eines doppellagigen Bereichs, der von der Tragfläche 2a hervorragt ausgebildet. Der Begriff "durchgängig" beschreibt, dass der Fördergurt über die gesamte Länge ununterbrochen ist und lediglich genau zwei Enden aufweist, die miteinander verbunden werden, um einen endlosen Fördergurt zu fertigen. Durch das Falten kann im Bereich der Mitnehmer 4 eine Gesamtbruchkraft des Gurtes erzielt werden, die größer als 50%, insbesondere größer als 60% der Gesamtbruchkraft des Gurtes außerhalb der Mitnehmer (im Bereich der Tragfläche) ist.

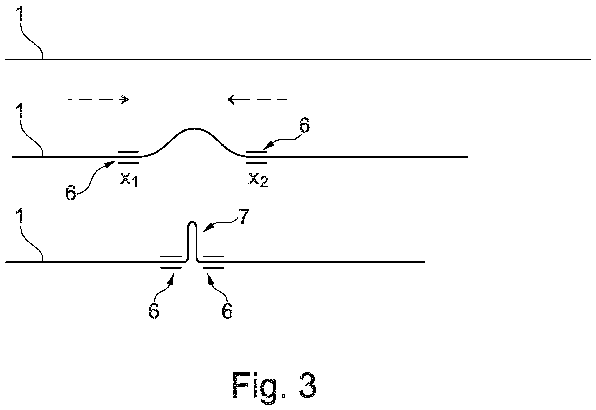

Figur 3 stellt den Faltvorgang dar. In der obersten Darstellung ist der Fördergurt (zumindest bereichsweise) eben ausgelegt. Der Fördergurt wird an zwei Positionen des Gurtes x1,x2 von jeweils einem Klemmbankenpaar 6 eingespannt, wie in der mittleren Darstellung dargestellt. Dabei liegt der Fördergurt 1 an den Positionen x1,x2 jeweils eingeklemmt zwischen den beiden Klemmbanken eines Klemmbackenpaares 6. Zur Ausbildung eines Mitnehmers werden die Klemmbackenpaare 6 translatorisch in einer Ebene bewegt (aufeinander zugeschoben) und der Bereich des Fördergurtes zwischen den beiden Klemmmbackenpaaren wölbt sich aus der durch die Klemmmbackenpaare aufgespannten Ebene (bzw. Tragfläche) heraus. Die Pfeile symbolisieren die Verschieberichtung der Klemmbackenpaare 6. Der Fördergurt 1 wird gefaltet und es bildet sich ein doppellagiger Bereich aus, der den Mitnehmer ausbildet. In einem nächsten, nicht dargestellten Schritt werden die beiden Lagen des Fördergurtes im doppellagigen Bereich miteinander vernäht, verklebt oder auf sonstige Art miteinander befestigt. Bevorzugt ist ein Vernähen vorgesehen, wobei die Naht durch Stiche, die sich im Wesentlichen in Querrichtung erstrecken erfolgt. Es können eine oder mehrere Nähte vorgesehen sein. Die Naht erstreckt sich bevorzugt über die gesamte Breite des ausgebildeten Mitnehmers, um die beiden Lagen des Fördergurtes miteinander in einem Fußbereich des Mitnehmers unmittelbar oberhalb der Tragseite des Gurtes zu befestigen.

Wie in Figur 2 dargestellt, können auch zwei Quernähte 7 vorgesehen sein, die in der Höhe zueinander beabstandet sind, um beispielsweise zu verhindern, dass der Mitnehmer eine Beule oder sonstige Deformation aufweist und um Sicherzustellen, dass die beiden Lagen im doppellagigen Bereich möglichst vollflächig miteinander befestigt sind. In der Figur 2 sind die Nähte rein schematisch durch eine gestrichelte Linie dargestellt. Es ist aber auch denkbar, Klemmbacken zur Befestigung der Lagen aneinander einzusetzen oder die beiden Lagen mittels Vulkanisation miteinander zu verbinden.

Das Verfahren eignet sich besonders gut zur Automatisierung. Dabei kann durch das gezielte Fixieren und Zusammenschieben des Fördergurtes eine hohe Prozesssicherheit erzielt werden. Fördergurte dieser Art werden herkömmlicherweise mit einer Länge von 100 m auf Rollen verkauft. Das Verfahren ermöglicht einen Fördergurt ohne Limitation in der Länge (also bis 100 m) kontinuierlich herzustellen und dann nach der Herstellung auf die benötigte Länge zu kürzen. Anschließend wird der Fördergurt endlosgeschlossen, beispielsweise durch Vernähen der beiden Gurtenden.

Die Höhe der Mitnehmer liegt bevorzugt in einem Bereich zwischen 10 mm und 60 mm. Die Höhe ist der Abstand zwischen der Tragfläche des Fördergurtes und einer oberen Kante des Mitnehmers.

## Patentansprüche

1. Endloser Fördergurt (1) mit einer Vielzahl an Mitnehmern (4), wobei die Mitnehmer (4) jeweils durch eine Faltung des Fördergurtes ausgebildet sind.

2. Endloser Fördergurt nach Anspruch 1, **dadurch gekennzeichnet, dass** der Fördergurt (1) eine einzige Gewebelage mit einem in Querrichtung ausgerichteten Monofilament aufweist.

3. Endloser Fördergurt nach Anspruch 1 oder 2, **dadurch gekennzeichnet, dass** der gefaltete Fördergurt (1) im doppellagigen Bereich zur Fixierung der Faltung vernäht ist.

4. Endloser Fördergurt nach einem der vorhergehenden Ansprüche, **dadurch gekennzeichnet, dass** der Fördergurt (1) eine Breite von mindestens 500 mm aufweist.

5. Verwendung eines endlosen Fördergurtes (1) nach einem der vorhergehenden Ansprüche in einer Querfördervorrichtung eines Draper-Schneidwerkes, eines Bandschwaders, oder Kartoffelroders.

6. Förderer mit einem endlosen Fördergurt (1) nach einem der Ansprüche 1 bis 4.

7. Förderer nach Anspruch 6, **dadurch gekennzeichnet, dass** die durch Faltung ausgebildeten Mitnehmer (4) in Längsrichtung des endlosen Fördergurtes (1) gleichmäßig beabstandet sind, wobei der endlose Fördergurt (1) über Umlenkrollen (5) umläuft und ein Abstand (a) zwischen zwei aufeinanderfolgenden Mitnehmern (4) kleiner ist als ein Abtragbereich (b) der Umlenkrollen (5) und der Fördergurt (1) über die Mitnehmer (4) hinweg von einem ersten Ende bis zu einem zweiten Ende durchgängig ausgebildet ist.

8. Verfahren zur Herstellung eines endlosen Fördergurtes (1) mit Mitnehmern (4) aufweisend die folgenden Schritte:
a) Bereitstellen eines Fördergurtes,
b) Falten des Fördergurtes und Ausbilden eines doppellagigen Bereichs zur Ausbildung eines Mitnehmers (4),
c) Befestigen der beiden Lagen aneinander im doppellagigen Bereich zur Fixierung der Faltung.

9. Verfahren nach Anspruch 8, **dadurch gekennzeichnet, dass** die Schritte an einem durchgängigen Fördergurt (1) an einer Vielzahl an gleichmäßig zueinander beanstandeten Positionen wiederholt wird, um eine Vielzahl an Mitnehmer (4) auszubilden.

10. Verfahren nach Anspruch 9, **dadurch gekennzeichnet, dass** das Verfahren die folgenden Schritte umfasst:
d) Ablängen des gefalteten Fördergurtes (1) und Befestigen der beiden Enden des Fördergurtes aneinander zur Ausbildung eines Endlosfördergurtes.

11. Verfahren nach einem der vorhergehen Ansprüche 8 bis 10, **dadurch gekennzeichnet, dass** in Schritt c) die beiden Lagen des Fördergurtes (1) im doppellagigen Bereich miteinander vernäht werden.

12. Verfahren nach Anspruch 11, **dadurch gekennzeichnet, dass** das Vernähen in Querrichtung des Fördergurtes (1) über die gesamte Breite des ausgebildeten Mitnehmers (4) erfolgt.

13. Verfahren nach Anspruch 11 oder 12, **dadurch gekennzeichnet, dass** das Vernähen wenigstens eine Naht (7) ausbildet, die in unmittelbarer Nähe zur Tragfläche (2a) angeordnet ist.

14. Verfahren nach Anspruch 13, **dadurch gekennzeichnet, dass** eine zweite Naht (7) beim Vernähen ausgebildet wird, die zu einer ersten Naht (7) in der Höhe beabstandet ist.

15. Verfahren nach einem der Ansprüche 8 bis 14, **dadurch gekennzeichnet, dass** das der Fördergurt (1) aus vernetztem Polymer oder Thermoplast mit einer einzigen eingebetteten Gewebelage gebildet ist.
